Europäisches Patentamt

(19) **European Patent Office**

**Office européen des brevets**

(11) Numéro de publication: **0 036 368**
**B1**

(12) ## FASCICULE DE BREVET EUROPÉEN

(45) Date de publication du fascicule du brevet:
**25.05.83**

(51) Int. Cl.³: **F 16 D 55/224**

(21) Numéro de dépôt: **81400391.9**

(22) Date de dépôt: **13.03.81**

(54) **Frein à disque.**

(30) Priorité: **18.03.80 FR 8005982**

(43) Date de publication de la demande:
**23.09.81 Bulletin 81/38**

(45) Mention de la délivrance du brevet:
**25.05.83 Bulletin 83/21**

(84) Etats contractants désignés:
**DE FR GB IT SE**

(56) Documents cités:
**FR-A-2 196 038**
**FR-A-2 342 431**
**FR-A-2 420 692**

(73) Titulaire: **SOCIETE ANONYME D.B.A., Centre Paris Pleyel, F-93521 St Denis Cédex 01 (FR)**

(72) Inventeur: **Courbot, Pierre, 1bis, rue d'Hérivaux, F-95400 Villiers le Bel (FR)**

(74) Mandataire: **Poidatz, Emmanuel et al, Service Brevets Bendix 44 rue François 1er, F-75008 Paris (FR)**

BUNDESDRUCKEREI BERLIN

## Frein à disque

La présente invention a pour objet un frein à disque.

L'invention vise plus particulièrement un frein à disque dont l'étrier est monté coulissant sur un support fixe dans une ouverture duquel sont reçus en ancrage et en coulissement axial deux organes de friction susceptibles de venir en engagement de friction acec les faces opposées d'un disque tournant lors de la mise en oeuvre d'un moteur de frein agissant directement sur l'un des organes de friction et, par réaction au travers de l'étrier coulissant, sur l'autre organe de friction.

On connaît un frein à disque du type décrit ci-dessus dans lequel l'étrier est monté coulissant sur le support fixe au moyen d'une colonnette axiale solidaire du support fixe et coopérant avec un alésage formé en vis-à-vis dans l'étrier et au moyen de deux surfaces planes complémentaires de coulissement axial, formées sur l'étrier et sur le support fixe pour faciliter les mouvements relatifs de l'étrier par rapport au support fixe tout en s'opposant au basculement de l'étrier autour de la colonnette de coulissement lorsque l'étrier occupe sa position normale de fonctionnement. Dans ce type de frein, les surfaces planes de coulissement sont ouvertes aux intempéries et sujettes aux accumulations d'impuretés et à la corrosion. Une telle corrosion des surfaces risque d'altérer le bon coulissement de l'étrier sur le support fixe et de nuire ainsi au bon fonctionnement du frein.

Afin de remédier à ces inconvénients, on a déjà proposé dans le brevet anglais GB 1 532 572 publié le 15 novembre 1978 d'interposer, entre les surfaces complémentaires de coulissement, une clavette de coulissement amovible facilitant le coulissement de l'étrier sur le support fixe et s'opposant au basculement accidentel de l'étrier autour de la colonnette, un ressort étant de plus prévu pour maintenir les surfaces de coulissement en contact avec les faces opposées de la clavette.

Toutefois, dans ce frein, le remplacement des organes de friction est une opération compliquée nécessitant le démontage de la clavette de guidage par translation axiale de cette dernière, après avoir ôté les deux goupilles de sécurité qui lui sont normalement associées.

L'invention propose un frein à disque du type qui vient d'être décrit dans lequel les surfaces complémentaires de coulissement et la clavette de guidage sont remplacés par un élément de verrouillage s'étendant axialement entre l'étrier et le support fixe pour coopérer au guidage de l'étrier.

Dans ce but, l'invention propose un frein à disque dont l'étrier est monté coulissant sur un support fixe par l'intermédiaire d'une colonnette axiale solidaire de l'étrier ou du support fixe et coopérant avec un alésage correspondant du support fixe ou de l'étrier, un élément de verrouillage s'étendant axialement entre ledit étrier et ledit support fixe pour coopérer au guidage de l'étrier sur le support fixe et s'opposer à son basculement autour de ladite colonnette lorsqu'il occupe sa position normale de fonctionnement et étant susceptible d'être effacé lorsqu'on désire basculer ledit étrier pour accéder aux organes de friction, caractérisé en ce que ledit élément de verrouillage est fixé au support fixe ou à l'étrier et est maintenu élastiquement, dans un plan parallèle à un plan sensiblement tangent à la circonférence externe de l'étrier, en vis-à-vis d'une portion entaillée fomée dans l'étrier ou dans le support fixe et qui comporte une face d'appui s'étendant axialement pour éviter l'échappement radial dudit élément de verrouillage.

Selon une autre caractéristique de l'invention, ledit élément de verrouillage consiste en un élément élastique allongé fixé au support fixe ou à l'étrier par l'une de ses extrémités.

Le frein à disque objet de la présente invention permet ainsi un remplacement très simple des organes de friction et offre toutes les garanties de fiabilité quant au remontage correct de l'ensemble des composants du frein, le remplacement des organes de friction ne nécessitant en effet le démontage d'aucun composant du frein autre que les organes de friction eux-mêmes.

L'invention sera maintenant décrite à titre d'exemple en se référant aux dessins annexés dans lesquels:

— la figure 1 est une vue de dessus d'un premier mode de réalisation d'un frein à disque réalisé conformément aux enseignements de la présente invention;

— la figure 2 est une vue en coupe selon la ligne 2-2 de la figure 1, montrant les étapes d'assemblage du frein;

— la figure 3 est une vue en coupe partielle selon la ligne 3-3 de la figure 1;

— la figure 4 est une vue en coupe selon la ligne 4-4 de la figure 3;

— la figure 5 est une vue de détail représentant l'élément de verrouillage du frein à disque représenté à la figure 1 dans une position particulière qu'il occupe lors de l'assemblage du frein;

— la figure 6 est une vue de dessus partielle d'un second mode de réalisation de l'élément de verrouillage du frein à disque; et

— la figure 7 est une vue similaire à la figure 4 montrant la fixation de l'élément de verrouillage représenté à la figure 6.

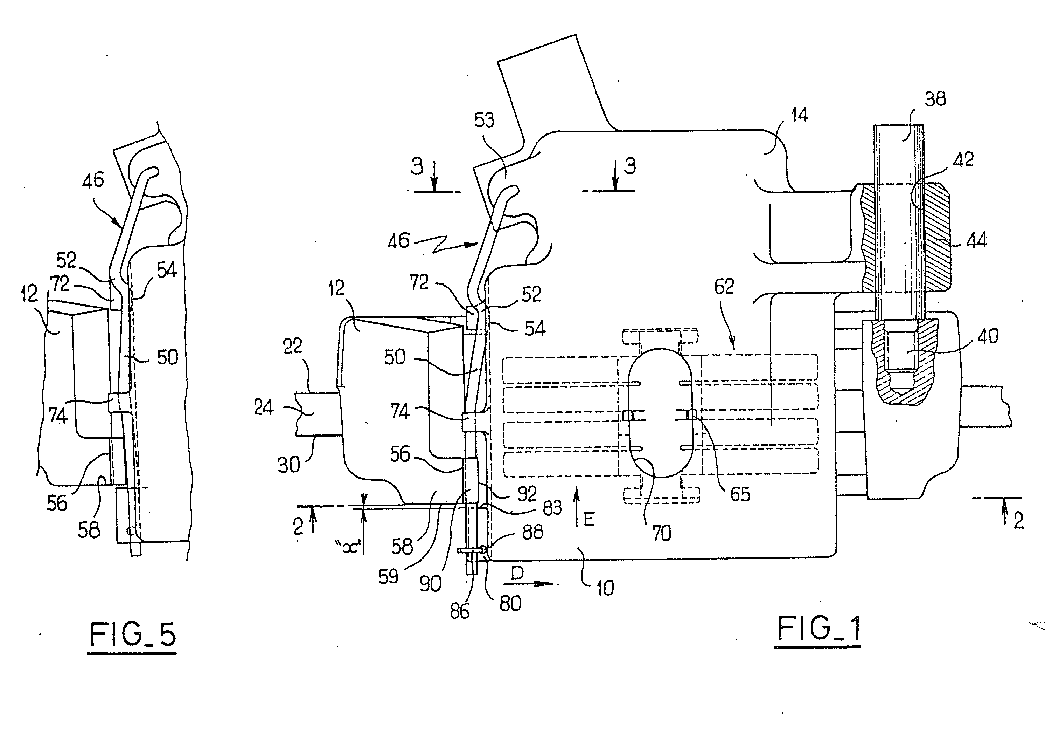

Le frein à disque représenté sur les figures 1 à 5 comprend un cadre ou étrier mobile 10 monté coulissant sur un organe support fixe 12. Des moyens de commande constitués dans le mode de réalisation représenté par un moteur de frein hydraulique 14, sont associés à l'étrier 10 et disposés de façon à solliciter directement au moyen d'un piston 16 un organe de friction 18, comportant une plaque support 20, contre une première face 22 d'un disque de frein 24 associé à une roue du véhicule (non représentée). Par réaction, lors de la mise en oeuvre du moteur de frein 14 et de son piston 16, l'étrier 10 se déplace axialement et sollicite un second organe de friction 26 comportant une plaque support 28 contre la seconde face 30 du disque de frein 24.

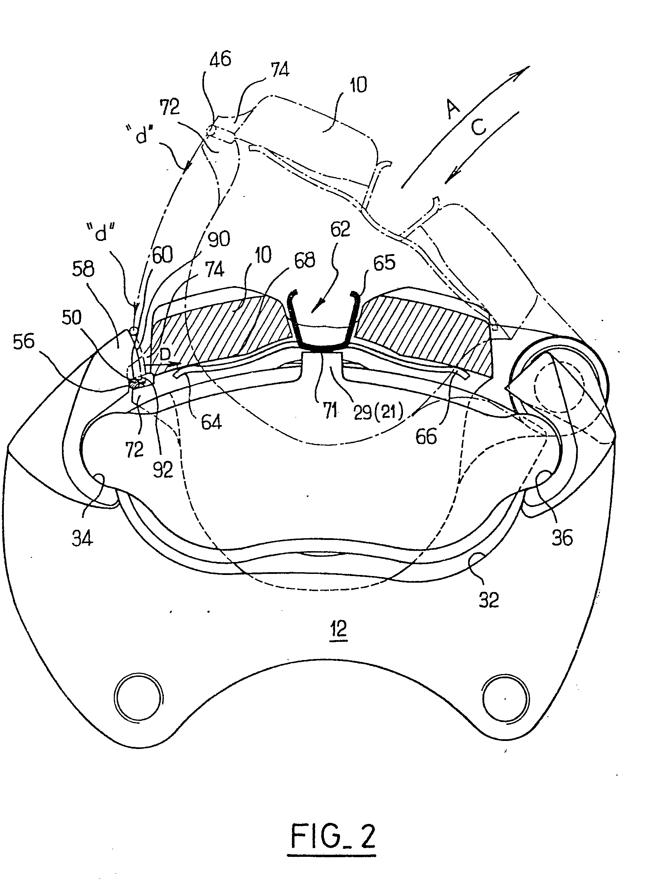

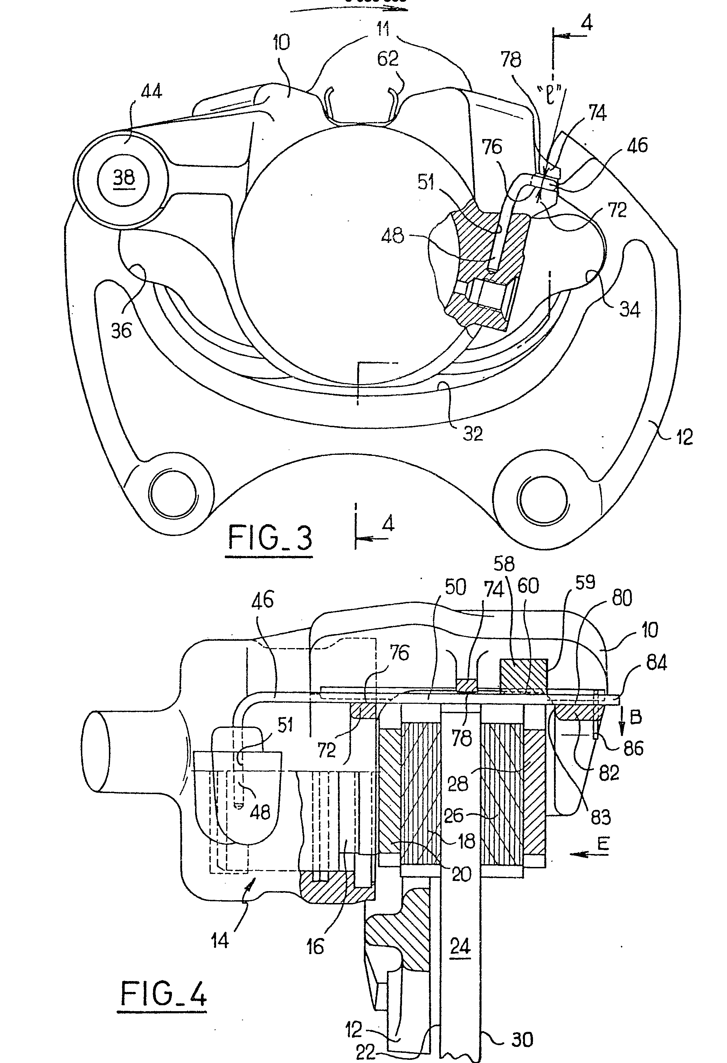

Comme le montrent en particulier les figures 2 et 3, le support fixe 12 est muni d'une ouverture 32 dont les bords circonférentiellement espacés 34 et 36 supportent en ancrage et en coulissement les plaques support 20 et 28 des organes de friction 18 et 26, de telle sorte que le support fixe 12 constitue pour ces derniers un organe support de couple.

L'étrier 10 est monté coulissant sur le support fixe 12 par l'intermédiaire d'une colonnette axiale 38. Dans le mode de réalisation représenté et comme le montre plus marticulièrement la figure 1, la colonnette 38 est rendue solidaire du support fixe 12 par une liaison filetée 40. La colonnette 38 est reçue en coulissement dans un alésage 42 formé dans un bras 44 de l'étrier 10.

Conformément à l'invention, on a prévu un élément de verrouillage 46 qui s'étend axialement entre l'étrier 10 et le support fixe 12 pour coopérer au guidage de l'étrier sur le support fixe. Dans le mode de réalisation représenté, l'élément de verrouillage 46 est constitué par un élément élastique réalisé dans un fil à ressort métallique cylindrique. La branche principale 50 de l'élément de verrouillage 46 s'étend dans un plan parallèle à un plan sensiblement tangent à la circonférence externe 11 de l'étrier 10. L'élément de verrouillage 46 est fixé à l'étrier 10 au moyen d'une de ses extrémités 48. L'extrémité 48 de l'élément de verrouillage 46 forme avec la branche principale 50 de ce dernier un angle sensiblement égale à 90° (voir figure 4), et est emmanchée à force dans un alésage 51 formé dans une portion faisant saillie 53 de l'étrier. Comme on peut le constater sur la figure 1, la branche principale 50 de l'élément de verrouillage 46 possède une partie coudée 52 présentant dans ledit plan sensiblement la forme d'un »S«. L'élément de verrouillage 46 prend appui sur sa partie coudée 52 sur un bord 54 de l'étrier formé en vis-à-vis de la partie coudée 52, et est sollicité élastiquement dans ledit plan défini ci-dessus vers une portion entaillée 56 formée sur un bras 58 du support fixe 12. Grâce à l'action élastique exercée sur l'élément de verrouillage 46, ce dernier est en maintenu en vis-à-vis de la portion entaillée 56 lorsque les composants du frein occupent leur position normale de fonctionnement. La portion entaillée 56 comporte une face d'appui plane 60 s'étendant parallèlement à l'axe du disque 24. Dans le mode de réalisation représenté, la branche principale 50 de l'élément de verrouillage 46 est maintenue en contact avec la surface d'appui 60 au moyen d'un ressort 62. Le ressort 62 est un ressort en tôle fixé à l'étrier 10 et qui prend appui sur les organes de friction 18 et 26. Les extrémités 64 et 66 des branches du ressort 62 prennent appui sur la face interne 68 de la voûte de l'étrier 10 de façon à répartir l'effort d'appui quelque soit le défaut de forme de la voûte de l'étrier. Le ressort 62 est fixé à la voûte de l'étrier 10 au moyen de sa portion centrale 65 qui est emboîtée élastiquement dans une ouverture 70 de la voûte de l'étrier 10. Le ressort 62 est ainsi fixé à l'étrier et reste solidaire de ce dernier lors du démontage du frein. Comme le montre la figure 2, le ressort 62 prend appui sur les parties centrales 21 et 29 des bords supérieurs externes des plaques support 20 et 28 des organes de friction et sollicite l'étrier 10 dans la direction indiquée par la flèche A. On comprend ainsi que le ressort 62 a pour double fonction, premièrement de maintenir la branche principale 50 de l'élément de verrouillage 46 en contact acec la face d'appui 60, et deuxièmement d'agir comme ressort antibruit pour les organes de friction 18 et 26. En effet, la partie centrale 71 du ressort 62 sollicite les plaques support 20 et 28 en appui sur les surfaces d'ancrage et de coulissement 34 et 36 et s'oppose ainsi à toutes les vibrations parasites pouvant apparaître entre les organes de friction et le support fixe.

Conformément à l'invention, la face plane d'appui 60 évite l'échappement radial de l'élément de verrouillage 46, dans la direction indiquée par la flèche A de la figure 2 et s'oppose ainsi au basculement de l'étrier autour de la colonnette axiale 38 sous l'effet de la sollicitation qui lui est appliquée par le ressort 62, lorsque l'élément de verrouillage 46 occupe sa position normale de fonctionnement tel que représentée notamment à la figure 1.

Conformément à l'invention, on a prévu des moyens pour maintenir l'élément 46 dans le plan défini plus haut et permettre son déplacement dans le plan. Ces moyens sont constitués par deux surfaces planes 76 et 78 formées sur deux saillies 72 et 74, respectivement, venues de matière avec l'étrier 10 et s'étendant depuis la périphérie de ce dernier.

Comme le montrent en particulier les figures 2 et 3, les surfaces 76 et 80 sont parallèles au plan de déplacement de l'élément de verrouillage 46 et sont espacées d'une distance »l« légèrement supérieure au diamètre du fil constituant l'élément de verrouillage 46 afin de permettre les déplacements de ce dernier entre les surfaces 76 et 78. Lorsque l'étrier occupe sa position normale de fonctionnement, les surfaces de maintien 76 et 78 sont parallèles à la face d'appui 60 formée sur le bras 58 su support fixe (voir figure 4).

Afin d'éviter des déformations trop importantes de la branche 50 de l'élément de verrouillage 46, on a prévu sur l'étrier 10 une surface de butée 80 s'étendant parallèlement aux surfaces 76 et 78, formée sur une saillie supplémentaire 82 venue de matière avec l'étrier 10. Grâce à la surface de butée 80, l'extrémité 84 de la branche 50 ne peut se déformer dans la direction indiquée par la flèche B de la figure 4. Un échappement accidentel de l'élément de verrouillage 46 sous l'effet de la sollocitation appliquée à l'étrier 10 par le ressort 62 est ainsi évité. Par mesure de sécurité on a en outre prévu une goupille de sécurité 86 qui immobilise l'extrémité 84 de la branche 50 par rapport à la saillie 82. La goupille 86 est montée élastiquement dans un orifice 88 percé dans la saillie 82.

Le frein à disque représenté sur les figures 1 à 5 est muni d'organes de friction neufs. Dans de telles conditions, et comme on peut le constater sur la figure 1, il existe un jeu fonctionnel »x« entre le bord latéral 59 du bras 58 et le bord latéral 83 de la saillie supplémentaire 82. Ce jeu fonctionnel est destiné à permettre le basculement de l'étrier 10 autour de la colonnette axiale 38 lors de l'assemblage du frein. Après plusieurs applications de freinage, l'usure progressive de l'organe oe friction 26 va provoquer un déplacement progressif de l'étrier 14 dans la direction indiquée par la flèche »E« (voir figures 1 et 4), le bord latéral 83 se déplaçant ainsi dans la même direction. Grâce à ce déplacement le bord latéral 83 et la surface de butée 80 vont venir progressivement en vis-à-vis de la surface plane 60 formée sur la saillie. On comprend qu'ainsi tout échappement accidentel de l'étrier 10, dans la direction indiquée par la flèche »A«, est évité même en cas de rupture de l'élément de verrouillage 46.

Es se référant maintenant à la figure 2, on constate que la branche 58 du support fixe 12 est munie d'une rampe 90. La rampe 90 est destinée à provoquer un déplacement de la branche 50 de l'élément de verrouillage 46, à l'encontre de son élasticité propre, lorsque l'on effectue le basculement de l'étrier vers sa position normale de fonctionnement autour de la colonnette axiale 38. La rampe 90 s'étend sensiblement dans un plan radial passant par le bord externe 92 de la face d'appui 60 de la portion en saillie 56.

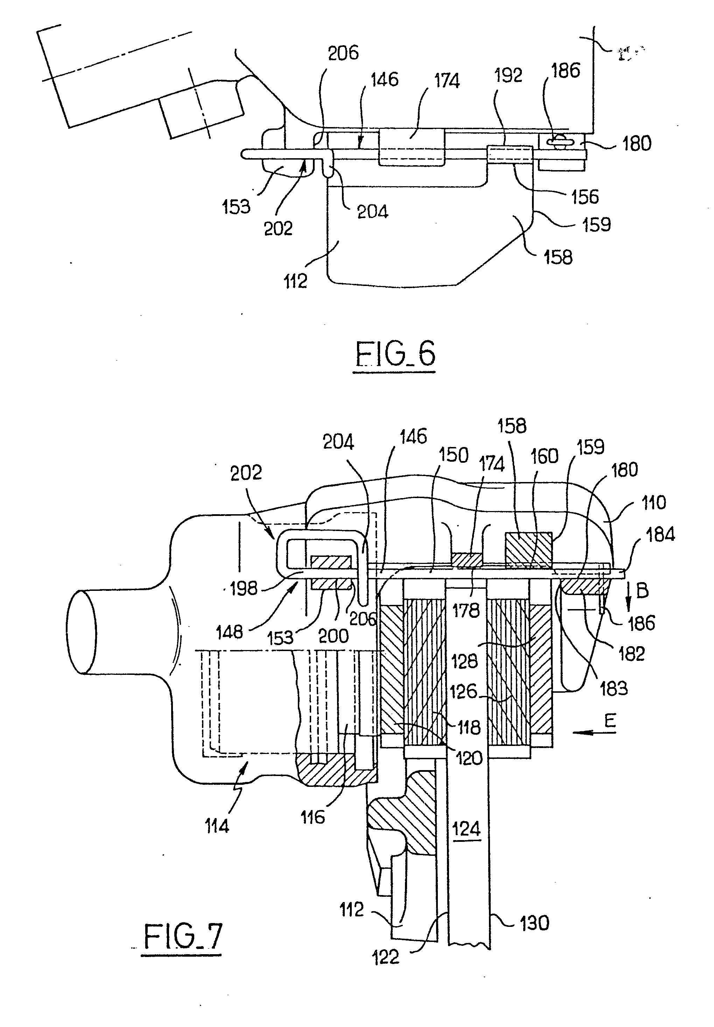

L'assemblage du frein s'effectue de la manière suivante, après avoir introduit les organes de friction 18 et 26 sur les surfaces de coulissement 34 et 36 du support fixe 12, on introduit l'extrémité libre de la colonnette axiale 38 dans l'alésage 42 formé dans le bras 44 de l'étrier 10. On fait alors coulisser l'étrier 10 sur la colonnette 38 jusqu'à amener ce dernier au-dessus des organes de friction. On peut alors, grâce au jeu fonctionnel »x«, basculer l'étrier autour de la colonnette 38 dans la direction indiquée par la flèche »C« de la figure 2; lors de ce basculement et comme il est indiqué au moyen des flèches »d«, l'élément de verrouillage 46 décrit une portion de cercle pour venir en contact avec la partie supérieure de la rampe 90. Au même instant, la portion centrale 70 du ressort 62 vient en contact avec les parties centrales supieures des plaques support 20 et 28 des organes de friction 18 et 26. L'opérateur doit alors appliquer un effort supplémentaire sur la voûte de l'étrier 10 dans la direction indiquée par la flèche »C« afin de comprimer le ressort 62 et de provoquer un déplacement de la branche prinzipale 50 de l'élément 46 le long de la rampe 90 et dans la direction indiquée par la flèche »D«. Grâce au déplacement combiné de la branche 50 dans les directions »C« et »D«, la branche 50 de l'élément 46 est amenée dans la position limite représentée à la figure 5 qu'elle occupe avant que l'étrier atteigne sa position normale de fonctionnement, c'est-à-dire avant que la branche vienne en contact avec la face d'appui 60 et verrouille ainsi l'étrier dans sa position de fonctionnement. La branche 50 est dans cette position sollicitée élastiquement en appui sur le bord 56 et est maintenue en contact avec la face 60 grâce à l'action du ressort 62. Il ne reste plus alors qu'à monter la goupille de sécurité 86 dans l'orifice 88 de l'étrier 10.

Lorsque l'opérateur décide procéder au remplacement des organes de friction, il procède de la manière suivante: après avoir ôté la goupille de sécurité 86, l'opérateur sollicite la branche 50 de l'élément de verrouillage 46 dans la direction indiquée par la flèche »D« en agissant sur celle-ci en un point situé entre la saillie 74 et la branche 58 du support fixe au moyen d'un outil (non représenté) en prenant appui sur le support 12. Sous l'effet de cette sollicitation la branche 50 suit le chemin inverse de celui représenté par les flèches »d«. Ce déplacement s'effectue automatiquement sous l'effet de la sollicitation élastique due au ressort 62, dès que la branche 50 a dépassé le bord d'extrémité 92 de la rampe 90. L'opérateur peut alors basculer complètement l'étrier dans la direction indiquée par la flèche »A« et procéder au remplacement des organes de friction. Lorsque ces derniers ont été remplacés, l'opérateur n'a plus qu'à basculer l'étrier dans la direction indiquée par la flèche »C« de la manière qui a été décrite plus haut, après avoir repoussé le piston 16 dans son alésage.

En fonctionnement normal, et comme on peut le constater notamment à la figure 2, lors du coulissement de l'étrier 10 sur la colonnette axiale 38, la branche 50 coulisse sur la surface d'appui 60. On comprend qu'ainsi les efforts de friction sont limités à la coopération de la génératrice externde de la branche 50 sur la suface 60. Les surfaces en contact sont ainsi réduites et n'offrent que peu de risques de corrosion.

On a représenté aux figures 6 et 7 un deuxième mode de réalisation de l'invention qui diffère essentiellement du premier mode de réalisation par la fixation de l'extrémité de l'élément de verrouillage sur l'étrier.

Les éléments des figures 6 et 7 identiques ou équivalents aux éléments déjà représentés aux figures 1 à 5 sont désignés par les mêmes références numériques augmentées de 100.

L'extrémité 148 de l'élément de verrouillage 146 est constituée par une portion cylindrique 198 du fil métallique reçue dans un alésage 200 formé dans la portion 153 faisant saillie de l'étrier 110. L'extrémité 148 est ainsi encastrée dans l'alésage 200 et maintenue élastiquement en vis-à-vis de la portion entaillée 156. Selon une autre caractéristique de l'invention, l'extrémité 148 est munie de moyens d'accrochage 202 coopérant avec la portion faisant saillie 153 afin d'éviter l'échappement accidentel de la portion cylindrique de l'extrémité 148 hors de l'alésage 200. Les moyens d'accrochage 202 sont constitués par une boucle formée à l'extrémité de ladite portion cylindrique 198 et dont la branche extrême 204 est susceptible de coopérer avec une face latérale 206 formée sur la saillie 153.

On comprendra que l'invention n'est pas limitée aux modes de réalisation qui viennent d'être décrits. L'élément 46 peut notamment être fixé au support fixe 12, dans ce cas la rampe 90 devra être formée sur l'étrier 10. A titre de variante et dans le cas où il n'est pas prévu de ressort d'étrier du type du ressort 62, la partie entaillée 56 pourra comporter une deuxième face d'appui permettant d'éviter la chute de l'étrier dans la direction indiquée par la flèche »C«.

## Revendications

1. Frein à disque dont l'étrier (10) est monté coulissant sur un support fixe (12) par l'intermédiaire d'une colonnette axiale (38) solidaire de l'étrier ou du support fixe et coopérant avec un alésage correspondant (42) du support fixe ou de l'étrier, un élément de verrouillage (46) s'étendant axialement entre ledit étrier et ledit support fixe pour coopérer au guidage de l'étrier sur le support fixe et s'opposer à son basculement autour de ladite colonnette lorsqu'il occupe sa position normale de fonctionnement et étant susceptible d'être effacé lorsqu'on désire basculer ledit étrier pour accéder aux organes de friction, caractérisé en ce que ledit élément de verrouillage (46) est fixé au support fixe (12) ou à l'étrier (10) et est maintenu élastiquement, dans un plan parallèle à un plan sensiblement tangent à la circonférence externe (11) de l'étrier, en vis-à-vis d'une portion entaillée (56) formée dans l'étrier ou dans le support fixe et qui comporte une face d'appui (60) s'étendant axialement pour éviter l'échappement radial dudit élément de verrouillage.

2. Frein à disque selon la revendication 1, caractérisé en ce que ledit élément de verrouillage (46) consiste en un élément élastiquement allongé fixé audit support fixe (12) ou audit étrier par une de ses extrémités (48).

3. Frein à disque selon l'une des revendications 1 ou 2, caractérisé en ce qu'il comporte des moyens de maintien (72, 74) prévus pour maintenir ledit élément de verrouillage (46) dans ledit plan tangent et permettre son déplacement parallèlement à ce plan.

4. Frein à disque selon la revendication 2, caractérisé en ce que ledit élément de verrouillage (46) est fixé à l'étrier (10), ladite portion entaillée (56) étant formée dans le support fixe (12) et lesdits moyens de maintien (72, 74) étant solidaires dudit étrier (10).

5. Frein à disque selon la revendication 4, caractérisé en ce que lesdits moyens de maintien (72, 74) comportent au moins deux surfaces parallèles (76, 78) audit plan tangent, lesdites surfaces (76, 78) étant espacées afin de permettre les déplacements dudit élément de verrouillage (46) entre ces surfaces et parallèlement audit plan.

6. Frein à disque selon la revendication 5, caractérisé en ce que lesdites surfaces parallèles (76, 78) sont formées respectivement sur deux saillies formant lesdits éléments de maintien (72, 74), venues de matière avec ledit étrier (10), et s'étendant depuis la périphérie de ce dernier.

7. Frein à disque selon l'une des revendications 4 ou 6, caractérisé en ce que ladite face d'appui (60) de ladite portion entaillée (56) est plane et s'étend parallèlement aux deux surfaces parallèles de maintien (76, 78) lorsque l'étrier occupe sa position normale de fonctionnement.

8. Frein à disque selon l'une quelconque des revendications précédentes, caractérisé en ce qu'il comporte une rampe (90) formée sur le support fixe (12) pour provoquer un déplacement dudit élément de verrouillage (46) à l'encontre de son élasticité lors du basculement de l'étrier (10) vers sa position normale de fonciitionnement.

9. Frein à disque selon la revendication 8, caractérisé en ce que ladite rampe (90) s'étend sensiblement dans un plan radial défini par le bord externe (92) de la face d'appui (60) de la portion entaillée (56).

10. Frein à disque selon la revendication 4, caractérisé en ce que ladite extrémité en ce que ladite extrémité (148) de l'élément de verrouillage (146) est une portion cylindrique encastrée dans un alésage (200) correspondant de l'étrier (114).

11. Frein à disque selon la revendication 10, caractérisé en ce que ladite extrémité (148) est munie de moyens d'accrochage (202) coopérant avec l'étrier (110) pour éviter l'échappement accidentel de ladite portion cylindrique (198) hors dudit alésage (200).

12. Frein à disque selon la revendication 11, caractérisé en ce que lesdits moyens d'accrochage (202) comportent une boucle formée à l'extrémité de ladite portion cylindrique (198).

13. Frein à disque selon l'une des revendications précédentes, caractérisé en ce que l'élément de verrouillage (116 ou 146) est réalisé dans un fil à ressort métallique et cylindrique.

## Patentansprüche

1. Scheibenbremse, dessen Sattel (10) auf einem festen Träger (12) mittels eines axialen Bolzens (38) gleitend gelagert ist, der mit dem Sattel oder dem festen Träger fest verbunden ist und mit einer entsprechenden Bohrung (42) des festen Trägers oder des Sattels zusammenwirkt, einem Verriegelungselement (46), das sich axial zwischen dem Sattel und dem festen Träger erstreckt, um bei der Führung des Sattels auf dem festen Träger mitzuwirken und einer Kippbewegung desselben um den Bolzen entgegenzuwirken, wenn er seine normale Betriebslage einnimmt, und das entfernbar ist, wenn der Sattel zwecks Zugang zu den Reibelementen gekippt werden soll, dadurch gekennzeichnet, daß das Verriegelungselement (46) am Festen Träger (12) oder am Sattel (10) befestigt ist und in einer Ebene, die parallel zu einer im wesentlichen zum Außenumfang (11) des Sattels tangentialen Ebene parallel verläuft, gegenüber einem eingeschnittenen Abschnitt (56) elastisch gehalten wird, der im Sattel oder dem festen Träger gebildet ist und der eine Anschlagfläche (60) aufweist, die sich in axialer Richtung erstreckt, um ein radiales Entweichen des Verriegelungselementes zu verhindern.

2. Scheibenbremse nach Anspruch 1, dadurch gekennzeichnet, daß das Verriegelungselement (46) aus einem elastischen, länglichen Element besteht, das mit einem seiner Enden (48) am Festen Träger (12) oder am Sattel befestigt ist.

3. Scheibenbremse nach einem der Ansprüche 1 oder 2, dadurch gekennzeichnet, daß sie Haltemittel (72, 74) aufweist, die dazu dienen, das Verriegelungselement (46) in der besagten Tangentialebene zu halten und seine Verschiebung parallel zu dieser Ebene zu ermöglichen.

4. Scheibenbremse nach Anspruch 2, dadurch gekennzeichnet, daß das Verriegelungselement (46) am Sattel (10) befestigt ist, wobei der eingeschnittene Abschnitt (56) in dem festen Träger (12) gebildet ist und die Haltemittel (72, 74) mit dem Sattel (10) fest verbunden sind.

5. Scheibenbremse nach Anspruch 4, dadurch gekennzeichnet, daß die Haltemittel (72, 74) mindestens zwei zu der Tangentialebene parallele Flächen (76, 78) aufweisen, die voneinander beabstandet sind, um die Verschiebung des Verriegelungselementes (46) zwischen diesen Flächen und parallel zu der besagten Ebene zu ermöglichen.

6. Scheibenbremse nach Anspruch 5, dadurch gekennzeichnet, daß die parallelen Flächen (76, 78) an zwei die Haltemittel bildenden Vorsprünge (72, 74) gebildet sind, die aus dem Material des Sattels (10) hergestellt sind und sich von dem Umfang des letzteren aus erstrecken.

7. Scheibenbremse nach einem der Ansprüche 4 oder 6, dadurch gekennzeichnet, daß die Anschlagfläche (60) des eingeschnittenen Abschnittes (56) eben ausgebildet ist und sich parallel zu den beiden parallelen Halteflächen (76, 78) erstreckt, wenn der Sattel seine normale Betriebslage einnimmt.

8. Scheibenbremse nach einem der vorhergehenden Ansprüche, dadurch gekennzeichnet, daß sie eine Rampe (90) aufweist, die am festen Träger (20) gebildet ist, um eine Verschiebung des Verriegelungselementes (46) entgegen seiner Elastizität bei einer Kippbewegung des Sattels (10) in seine normale Betriebslage hervorzurufen.

9. Scheibenbremse nach Anspruch 8, dadurch gekennzeichnet, daß sich die Rampe (90) im wesentlichen in einer Radialebene erstreckt, die von dem Außenrand (92) der Anschlagfläche (60) des eingeschnittenen Abschnittes (56) definiert wird.

10. Scheibenbremse nach Anspruch 4, dadurch gekennzeichnet, daß das besagte Ende (148) des Verriegelungselementes (146) ein zylindrischer Abschnitt ist, der in einer entsprechenden Bohrung (200) des Sattels (114) eingesetzt ist.

11. Scheibenbremse nach Anspruch 10, dadurch gekennzeichnet, daß das besagte Ende (148) mit hakenartigen Mitteln (202) versehen ist, die mit dem Sattel (110) zusammenwirken, um ein zufälliges Austreten des zylindrischen Abschnittes (198) aus der Bohrung (200) zu verhindern.

12. Scheibenbremse nach Anspruch 11, dadurch gekennzeichnet, daß die hakenartigen Mittel (202) eine Schlinge aufweisen, die am Ende des zylindrischen Abschnittes (198) gebildet ist.

13. Scheibenbremse nach einem der vorhergehenden Ansprüche, dadurch gekennzeichnet, daß das Verriegelungselement (46 oder 146) aus einem metallischen, zylindrischen Federdraht besteht.

## Claims

1. A disc brake, whose caliper (10) is slidably mounted upon a fixed support (12) via an axial column (38) solid with the caliper or the fixed support and cooperating with a corresponding bore (42) of the fixed support or the caliper, a locking element (46) extending axially between said caliper and said fixed support for cooperating to guide the caliper upon the fixed support and to oppose its pivoting about said column while it occupies its normal operating position and being adapted to be removed when it is desired to pivot said caliper for access to the friction elements, characterized in that said locking element (46) is fixed to the fixed support (12) or the caliper (10) and is resiliently held in a plane parallel to a plane substantially tangential to the external circumference (11) of the caliper, opposite to a recessed portion (56) formed in the caliper or in the fixed support, and which comprises an abutment surface (60) axially extending for preventing radial disengagement of said locking element.

2. A disc brake according to claim 1, characterized in that said locking element (46) consists of a resiliently elongated element fixed to the fixed support (12) or said caliper by one of its extremities (48).

3. A disc brake according to either one of claims 1 or 2, characterized in that it comprises holding means (72, 74) provided for holding said locking element (46) in said tangential plane and for permitting its displacement parallel to said plane.

4. A disc brake according to claim 2, characterized in that said locking element (46) is fixed to the caliper (10), said recessed portion (56) being formed in the fixed support (12) and said holding means (72, 74) being solid with the caliper (10).

5. A disc brake according to claim 4, characterized in that said holding means (72, 74) comprise at least two surfaces (76, 78) parallel to said tangential plane, said surfaces (76, 78) being spaced in order to permit the displacement of said locking element (46) between these surfaces and parallel to said plane.

6. A disc brake according to claim 5, characterized in that said parallel surfaces (76, 78) respectively are formed upon two projections (72, 74) forming said holding means, formed from the material of said caliper (10) and extending from the periphery of the latter.

7. A disc brake according to any of claims 4 or 6, characterized in that said abutment surface (60) of said recedded portion (56) is plane and extends parallel to the two parallel holding surfaces (76, 78) while the caliper occupies its normal operation position.

8. A disc brake according to any of the preceding claims, characterized in that it comprises a ramp (90) formed on the fixed support (12) for provoking a displacement of said locking element (46) against its resilience during pivoting of the caliper (10) towards its normal operating position.

9. A disc brake according to claim 8, characterized in that said ramp (90) extends substantially in a radial plane defined by the external edge (92) of the abutment surface (60) of the recessed portion (56).

10. A disc brake according to claim 4, characterized in that said extremity (148) of the locking element (146) is a cylindrical portion seated in a corresponding bore (200) of the caliper (114).

11. A disc brake according to claim 10, characterized in that said extremity (148) is provided with hook means (202) cooperating with the caliper (110) for preventing accidental removal of said cylindrical portion (198) from said bore (200).

12. A disc brake according to claim 11, characterized in that said hook means (202) comprise a buckle formed at the extremity of said cylindrical portion (128).

13. A disc brake according to any of the preceding claims, characterized in that the locking element (46 or 146) is comprised of a metallic and cylindrical spring wire.

FIG_5

FIG_1

0 036 368

FIG_2

0 036 368

FIG_3

FIG_4

FIG_6

FIG_7